# EUROPEAN PATENT APPLICATION

(11) **EP 4 545 898 A1**
(43) Date of publication of application: **30.04.2025**
(21) Application number: 23205600.2
(22) Date of filing: 24.10.2023
(51) Int. Cl.: F28F 3/02, G06F 30/17, G06F 30/23, G06F 30/28, H01L 23/367

(54) **COMPUTER-IMPLEMENTED METHOD FOR CUSTOM DESIGNING A HEAT SINK**

(71) Applicant: Diabatix N.V., 3001 Leuven (BE)
(72) Inventor: VERVECKEN, Lieven, 3360 Bierbeek (BE); VANDEBEEK, Ine, 3520 Zonhoven (BE); VAN MELLAERT, Roxane, 8553 Zwevegem (BE)
(74) Representative: Nederlandsch Octrooibureau

(57) **Abstract**

According to an embodiment a method is disclosed for designing a custom heat sink for exchanging heat with a component with a fluid medium comprising the steps of generating a mesh (201) of a patterned heat sink (100-102) comprising elements defining a discretized shape of a volume (202) enclosing the patterned heat sink containing a set of repeating massive patterns assembled on a base plate; generating a heat map of the mesh by imposing a thermal load thereby identifying thermal spots; iteratively solving until reaching a convergence criterium fluid flow equations and energy equations imposed on the mesh through a topology optimization method by minimizing a global performance function through minimizing of local gradients of the elements thereby determining a local contribution per element to an overall performance of the heat sink; omitting patterns having a local contribution below a first predefined value thereby obtaining the custom heat sink.

## Description

### Field of the Invention

The present invention relates to the field of heat sinks, and in particular heat sinks for heating devices comprising heating generating components, like electronic components, and/or heating devices like batteries.

More in particular, the present invention relates to a computer-implemented method for designing such heat sinks.

### Background

A heat sink is a passive heat exchanger designed to exchange heat with a device which comprises components which generate said heat, like electronic components, or which needs to be heated, like batteries in cases of cold starts. The heat sink transfers thermal energy from a higher-temperature device to a lowertemperature fluid medium or the other way around.

A heat sink is designed to maximize the heat transfer to the cooling medium surrounding it, such as the air. Cooling medium velocity, turbulence levels in the cooling medium, cooling medium physical properties, surface area in contact with the cooling medium surrounding it, choice of material, protrusion design and surface treatment are factors that affect the performance of a heat sink.

The aim of the heat sink is to guarantee the functional performance and/or operational lifetime of the heat generating components by regulating the temperature thereof. However, due to continued miniaturization of electronic devices and due to the continued increase in power consumption of electronic components, the heat dissipation rate has surpassed the limits of classical pin-fin type heat sinks or straightfin type heat sinks or variations or combinations of both. Therefore, there is a need for custom made heat sinks.

In US1 1003808B2 a computer-implemented method is disclosed for designing a heat sink. The method comprises the steps of performing a thermal simulation thereby determining contributions of tessellated portions, and removing one or more portions which are selected based on thermal values and contribute less to the thermal performance of the heat sink design. The thermal performance is linked to the mass of the heat sink combined with a constraint on the thermal resistance. This results in mass removal and an increase in thermal resistance.

A disadvantage of this disclosed method is that removing material locally does not guarantee that the overall performance will increase. Differently formulated, an optimization step on a local level does not necessarily lead to optimized design on a global level.

In US20230169233A1 another computer-implemented method is disclosed for designing a heat sink. In this method a heat sink design is generated by meeting a predetermined performance constraint. This is done by generating different heatsink configurations through removing and/or adding rods. Next, they are compared, and the rods are selected until a final heatsink configuration meets the predetermined performance constraint.

A heat sink is generated by adding layers in successive steps. A disadvantage thereof is that this can result in very complex designs, which are difficult to produce.

It is therefore an object of the present invention to alleviate the above drawbacks and to provide an improved solution for designing a heat sink in an efficient and fast manner.

### Summary of the Invention

This object is achieved, in a first aspect, by a computer implemented method according to claim 1 for designing a custom heat sink for exchanging heat with a component with a fluid medium, the method comprising the steps of:
- generating a mesh of a patterned heat sink, said mesh comprising elements defining a discretized shape of a volume enclosing the patterned heat sink, the patterned heat sink containing a set of repeating massive patterns assembled on a base plate;
- generating a heat map of the mesh by imposing a thermal load of the component thereby identifying one or more thermal spots;
- iteratively solving until reaching a convergence criterium fluid flow equations and energy equations imposed on the mesh through a topology optimization method by minimizing a global performance function through minimizing of local gradients of the elements thereby determining a local contribution per element to an overall performance of the heat sink;
- omitting one or more patterns from the patterned heat sink having a local contribution below a first predefined value thereby obtaining the custom heat sink.

The heat sink designed by the disclosed method is custom designed for exchanging heat with a heat-generating component or a component that needs to be heated. The efficiency thereof is dependent on the configuration of the heat sink in terms of its shape, as will be further explained, and needs to be adapted for its particular purpose in view of the component. In other words, there is no single configuration or shape of a heat sink that suits for any type of component, yet it needs to be adapted for it. Thus, through the method a heat sink is designed after several iterations fulfilling constraints demanded by the component, and/or the device wherein the component and the heat sink are integrated.

In a first step of the method a mesh is generated of the patterned heat sink. The term *patterned* means that the heat sink comprises a number of repeating elements thereby forming a pattern. In other words, there is a type of symmetry composed by the elements forming the heat sink. These elements are fins, pins, plates, and/or any other element suitable for forming a heat sink. The form of these elements can be further characterized by shapes like a cylindrical shape, an elliptical shape, a squared shape, or any other geometry. The elements are therefore conventional or standard elements. Further note that these elements can also be combined thereby forming a pattern, thus for example a configuration having alternating pins and fins. It should thus further be understood that a patterned heat sink is directed to a conventional or standard heat sink. This means that it is a heat sink *offthe-shelf* which further means that is can be produced on a large scale in an efficient manner, due to the presence of the patterns.

As explained, a combination of elements forms a pattern, and the pattern is further referred to as the massive pattern. This way it is highlighted that, according to a first embodiment of the invention, reference is made to the pattern formed by the massive elements, and not to the pattern formed by the void regions between the massive patterns. Note that this massive pattern can also comprise a sheet metal comprising a first metal plate deformed and welded on a second metal plate, such as a battery cold plate. Furthermore, pins and fins can internally be concave or half open as is also used for battery cold plates. It should thus be understood that the element can be of any shape as long as the are subject to form a pattern.

In this first step, a discretized shape is generated from a volume enclosing the patterned heat sink resulting in a mesh. Preferably the volume connects closely to the outer surface of the patterned heat sink. Alternatively, the volume has a standard shape, like a cube, beam, a cylinder, or another plain shape suitable for enclosing the patterned heat sink, or the volume has the shape of the channel or a part the channel wherein the heat sink is placed and through which the coolant flows.

The mesh comprises finite elements, volume element, boundary elements, or any other elements suitable to solve the equations in a discretized manner as further discussed. Alternatively, the mesh may also be generated in such a way that equations are solved using a finite difference method.

In a second step a heat map of the mesh is generated by imposing a thermal load of the component on the generated mesh. As already highlighted, the heat sink will be designed to exchange heat with the component. This means that the component generates heat when in use, or that the component needs to be heated. It is thus the thermal load of the component which is imposed on the mesh and by which hot spots, cold spots or in general thermal spots are identified on the surface and/or within the volume.

The next step is iteratively solving fluid flow equations and energy equations which are imposed on the mesh through a topology optimization method by minimizing a global performance function through minimizing the performance function gradients of the elements thereby determining a local contribution per element to an overall performance of the heat sink. The step of minimizing means that the optimum value is looked for which is from a mathematical point of view zero. The minimizing step should therefore not, for example, be interpreted as going to minus infinite but given the interpretation as logical for the skilled person active in the field of designing and optimizing heat sinks.

The minimizing of the global performance can further be done by minimizing an average temperature over the heatsink and/or by minimizing the weight of the heatsink and/or by minimizing the pressure drop over the heatsink and/or by minimizing a combination of two or more of any of these objectives, and optionally subject to one or multiple additional constraints. The aim is to identify through the minimizing the global performance function local contributions per element to this overall performance of the heat sink.

The fluid flow equations comprise a momentum equation, and/or a continuity equation, and/or a pressure equation, and/or a constitutive equation. A coolant flowing through and/or over the heat sink will be described by the velocity field, which on its turn obeys the conservation of mass and the conservation of momentum, also referred to as the Navier-Stokes equations. The momentum equation further dictates the relation with the pressure field, which is therefore coupled to the velocity field. Alternatively or additionally, the continuity equation may be solved from the pressure field, so instead of solving the momentum combined with the continuity equation, solving the momentum equation combined with the pressure equation automatically results in the continuity equation being satisfied.

The energy equations comprise the temperature equation and/or the enthalpy equation, and/or the internal energy equation, and/or a constitutive equation. These equations are solved for coolant, heat-generating components, heat sink, and any other body simultaneously. Alternatively, the energy equation is solved for each component, coolant, part, or body, sequentially in an iterative manner until a state of equilibrium is reached between all equations.

The topology optimization method is a mathematical method that optimizes material layout within a given design space for a given set of thermal loads, boundary conditions and constraints. The topology optimization method comprises one of the group of a density method, a level set method, and/or a shape optimization method, and/or a moving morphable component method. In a density method, also known as a material distribution method, the design is parameterized with a density function that takes a value between zero (void) and one (material), and therefore represents the distribution of material over the domain representing the heat sink. A level set method is a general method for the description of front evolution, wherein boundaries are defined by a zero-level set of a level set function and theoretically allows for a crisp boundary.

In a shape optimization method, outer and inner shapes of a component are optimized. These shapes are in general described by functions of local coordinates, instead of a finite number of parameters. The design space is therefore often called infinite dimensional. To cope with this, shape optimization relies on concepts from functional analysis.

According to an innovative feature of the invention, the method further comprises the step of until reaching a convergence criterium:
- omitting one or more patterns from the patterned heat sink having a local contribution below a first predefined value thereby obtaining the custom heat sink.

The evaluation of the local contribution to the overall performance is performed via the evaluation of the local gradient with respect to the performance function. The performance function evaluates the performance of the heat sink by evaluating the temperature, and/or thermal resistance, and/or pressure drop, and/or weight, or other physical properties of the heat sink or a combination of any of the previous. The choice of performance function directly influences the gradient field.

The gradient can be calculated via multiple methods, such as direct discretization, or by solving the so called dual problem to evaluate the adjoint variables, lagrange multipliers or costates. The latter approach allows to evaluate the gradient in a computationally efficient way and is therefore preferred.

The step of solving the fluid flow equations and identifying the patterns having a local contribution below a first predefined value is performed iteratively. In other words, after one or more steps of solving the equations, the contributions per element are determined and examined locally. If the value thereof is below the first predefined value, the patterns related thereto are omitted. This is done by calculating a gradient with respect to the performance function. When this gradient is below the first predefined value, for example below zero, its contribution is negative and can thus be omitted. This means that they are left out or cut away from the mesh. In practise this means that they get a value of zero or a void value in the topology optimization. Next, when they are omitted, a second cycle of solving the equations is performed, and subsequently another set of patterns is identified having a local contribution below the first predefined value, and thus can also be omitted. The steps are performed until the convergence criterium is reached.

The steps discussed above can also be interpreted as determining local contributions of parts of elements to an overall performance of the heat sink, and the omitting step as omitting parts of elements instead of omitting them completely. A part of an element can further be interpreted as a top part, a middle part, and/or a bottom part, for example from a pin or a fin, wherein the omitting can start with a top part, next a middle part and finally a bottom part.

Additionally, the method further comprises the step of, after at least one pattern is omitted through the omitting step:
- adding one or more previously omitted patterns when a respective local contribution becomes above the first predefined value after a next solving step.

In other words, it can occur that a pattern or element which was previously omitted can be added again. This is a consequence of the non-linearity of solving of the equations, like the Navier-Stokes equations.

The steps discussed above can also be interpreted as determining local contributions of parts of elements to an overall performance of the heat sink, and the adding step as adding parts of elements instead of adding them completely. A part of an element can further be interpreted as a top part, a middle part, and/or a bottom part, for example from a pin or a fin, wherein the adding can start with a bottom part, next a middle part and finally a top part.

Different advantages are identified. A first advantage is that a custom heat sink can be designed and thus produced by starting from a conventional or standard heat sink. This reduces the cost of producing them because, as experimentally identified by the inventors, a significant part of the standard or conventional heat sink can be maintained. The second advantage is therefore that the efficiency can substantially be increased with a minimal number of interventions, namely omitting a number of wellchosen patterns. The increase of efficiency is a result of the lower pressure drop over the heat sink compared to standard or conventional heat sink having the same volume. Thus as a result, a custom heat sink adapted to the constraints of the component, and in case the device wherein it is incorporated, is obtained.

Furthermore, in contrast to a general accepted assumption that the more surface area a heat sink has, the better its performance, the invention leads to a heat sink having less surface area although having a better performance. Note that one of the key concepts of a conventional or standard heat sink is to pack as much surface area into a given volume as possible. This accounts for patterned heat sink having pins, fins, plates, or other elements. The invention proves that by omitting a number of those elements, both the efficiency is increased and adapted to the imposed constraints.

The mesh can be generated according to different alternatives. As already pointed out, this can be done by enclosing the patterned heat sink with a volume. This volume can, in principle, be of any shape, as explained above. Secondly, according to an embodiment, the volume contains the set of repeating massive patterns. In other words, the volume is limited to the massive part of the heat sink. This way it is avoided that the alternating solving and omitting steps will converge to an arbitrary shape.

Another advantage is that a dedicated mesh can be used adapted to a certain type of pattern.

Additionally, according to an embodiment, the volume contains the set of repeating massive patterns and the base plate on which the elements are mounted. This way, the effect of the base plate on the calculated gradients is taken into account.

According to another embodiment, the volume contains void regions between the massive patterns instead of the massive patterns itself, whether or not with the base plate. This can be an advantage when the volume of the void regions is significantly smaller than the volume of the massive patterns. In this case, the number of elements of the mesh is likewise smaller resulting in less processing time for solving the equations.

According to a further embodiment, the method comprises iteratively performing the steps of:
- identifying one or more patterns of the set connectable to portions of respective adjacent void space having a local contribution above a second predefined value when connected;
- expanding said identified one or more patterns from the patterned heat sink with said respective portions thereby obtaining the custom heat sink.

Thus besides omitting one or more elements from the patterns, the method can further comprise the step of adding material to one or more of the elements. This is done by expanding patterns having a local contribution to the overall performance and/or constraint such as pressure drop above a second predefined value. When the elements of the pattern are pins, the expanding comprises adding material such that these elements will have, for example, a teardrop shape. Note that other ways of adding material are possible. It should however be understood that extending means that the surface by which heat can be exchanged is increased. Adapting the shape of a pin to a teardrop shape has the further advantage that the local pressure drop is decreased.

According to a second aspect of the invention, a computer-implemented method is disclosed for designing a container comprising a heat sink, the container comprising means to guide a fluid medium from an inlet to an outlet of said container for exchanging heat with a component, wherein when the heatsink is designed according to the first aspect of the invention, wherein the solving step further comprises minimizing a pressure drop between the inlet and the outlet or limiting the pressure drop between the inlet and the outlet to a predefined value, and wherein the identifying step for omitting patterns further comprises identifying one or more patterns of the set having a local pressure drop above a third predefined value.

According to an embodiment, the identifying step for connecting patterns further comprises identifying one or more patterns of the set having a local pressure drop above a fourth predefined value.

According to a third aspect of the invention, a heat sink designed according to the first aspect of the invention is disclosed, and/or a container designed according to second aspect of the invention is disclosed.

According to a fourth aspect, a data processing system is disclosed comprising means for carrying out the method according to the first and/or the second aspect of the invention.

According to a fifth aspect, a computer program product is disclosed comprising instructions which, when the program is executed by a computer, cause the computer to carry out the method according to the first and/or the second aspect of the invention.

According to a sixth aspect, a computer-readable storage medium is disclosed comprising instructions which, when executed by a computer, cause the computer to carry out the steps of the method according to the first and/or the second aspect of the invention. These steps can be executed on one CPU, GPU or any other computing unit, or on multiple CPUs, or GPUs or any other computing units simultaneously or sequentially.

According to a seventh aspect, the use of a heat sink and/or contain according to the third aspect of the invention for exchanging heat with an electronic component is disclosed.

### Brief Description of the Figures

The invention will be further illustrated with reference to the figures, wherein:
Fig. 1 illustrates different configurations of patterned or conventional heat sinks;
Fig. 2A illustrates the generation of a mesh according to a first embodiment;
Fig. 2B illustrates the generation of a mesh according to a second embodiment;
Fig. 2C illustrates the generation of a mesh according to a third embodiment;
Fig. 3 illustrates overview of the advantage of the disclosed method in view of the prior art;
Fig. 4 illustrates further details of generating a mesh; and
Fig. 5A and 5B illustrate schematically the steps of expanding respectively omitting patterns according to steps of the method.

### Detailed Description of Embodiments

The present invention will be described with respect to certain embodiments and with reference to certain figures, but the invention is not limited thereto and is defined only by the claims. The figures described are only schematic and non-limiting. In the figures, the size of certain elements may be exaggerated and not drawn to scale for illustrative purposes. The dimensions and relative dimensions do not necessarily correspond to actual practical embodiments of the invention.

In addition, the terms first, second, third and the like are used in the specification and in the claims to distinguish between like elements and not necessarily to describe a sequential or chronological order. The terms are interchangeable under appropriate circumstances and the embodiments of the invention may be used in sequences other than those described or illustrated herein.

Furthermore, the terms top, bottom, over, below and the like in the specification and claims are used for illustrative purposes and not necessarily to describe relative positions. The terms so used are interchangeable under appropriate circumstances, and the embodiments of the invention described herein may be used in orientations other than those described or illustrated herein.

Further, although referred to as "preferred embodiments", the various embodiments are to be construed as exemplary in which the invention may be practiced rather than as a limitation on the scope of the invention.

The term "comprising", used in the claims, should not be construed as being limited to the means or steps set forth below; the term does not exclude other elements or steps. The term should be interpreted as specifying the presence of the named features, elements, steps, or components referred to, but does not exclude the presence or addition of one or more other features, elements, steps or components, or groups thereof. The scope of the expression "a device comprising means A and B" should therefore not be limited to devices consisting only of the components A and B. The meaning is that with respect to the present invention only the components A and B of the device are listed, and the claim is further to be interpreted as including equivalents of these components.

The figures illustrate heat sinks in two dimensions, but it should be further understood that the designed heat sinks result in three dimensional heat sinks. The method disclosed is therefore applicable in three dimensions, but for reasons of understandability, the method will be further explained with references to the figures drawn up in two dimensions.

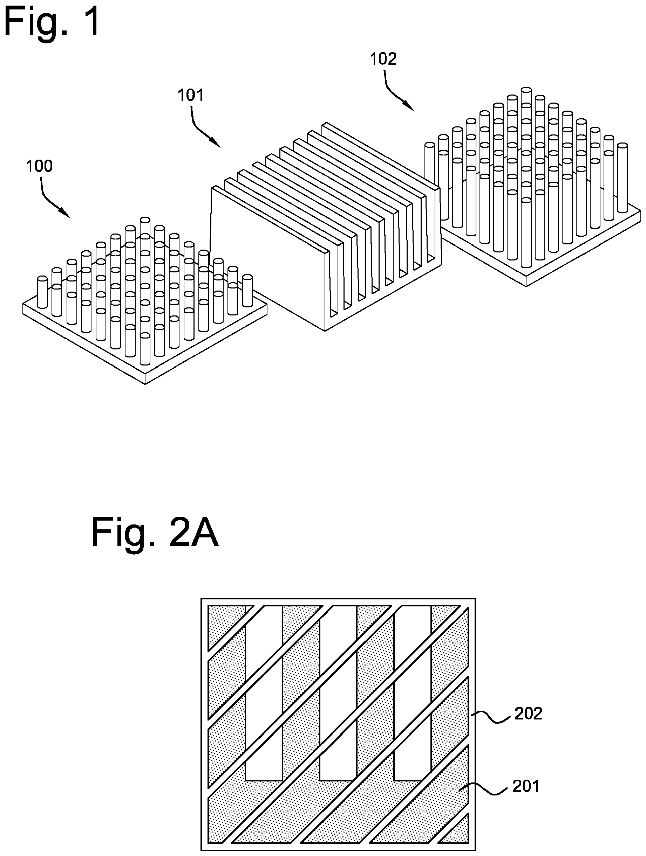

Fig. 1 illustrates three embodiments of heat sink having conventional or standard elements. These elements are pins 100, 102 or fins 101, wherein the size of the element can vary, such as the pins of 100 compared to the pins of 102. In the illustrations the elements are further mounted on a base plate. These heat sinks 100-102 have a standard design and can be produced on a vast scale. The disclosed method for designing a custom heat sink starts from a design of such a conventional one, such as 100-102. It should however be understood that other standard designs are possible, but that the illustrations in Fig. 1 are meant to shown that the standard designs have patterns because of the repetitions of the elements. Furthermore, a combination of the elements is likewise possible.

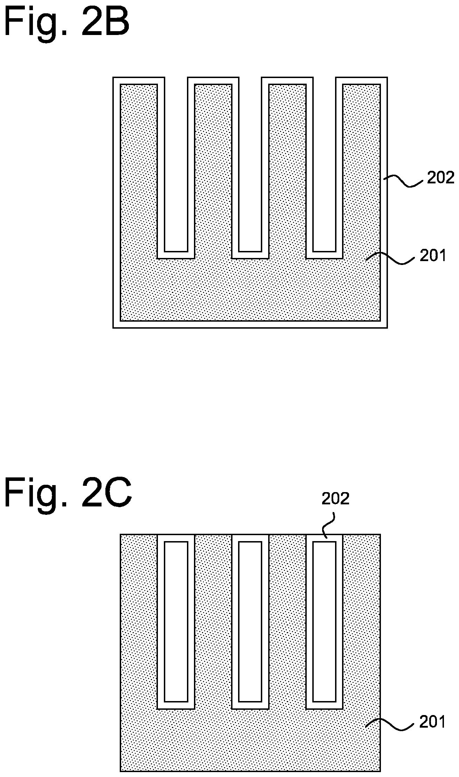

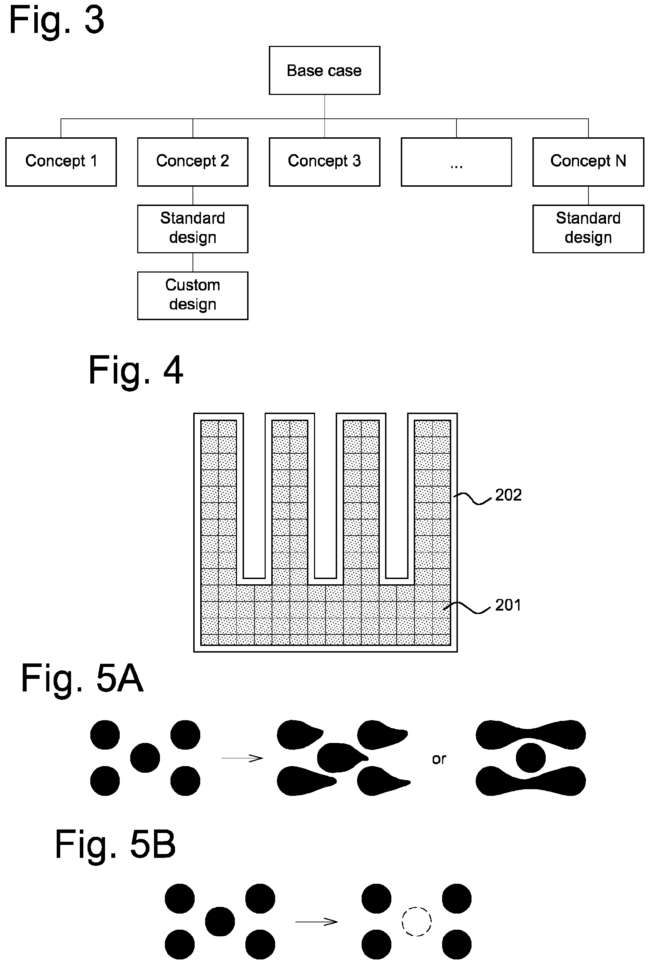

As a first step a mesh is generated of the patterned heat sink. This is done by enclosing the pattered heat sink by a volume. A first approach is to enclose the heat sink complete, as illustrated in Fig. 2A. The volume is illustrated by reference 202, and within the volume 201 a mesh is generated. In Fig. 4 an illustration is given of such a mesh with the same references as in Fig. 2A. The mesh comprises for example squared finite elements, but it should be further understood that other shapes or possible as well. In Fig. 2B the volume encloses the elements itself and the void regions between the elements. In Fig. 2C the volume encloses the void regions between the elements.

As explained above in the summary of the invention the innovative concept of the invention is that elements of patterns can be either omitted and/or expanded based on a local contribution to a global performance function. In Fig. 5A an illustration is given of elements which are expanded. Herein, the elements are initially circle shaped. Next, when one or more elements are expanded, the shape can be transformed to a teardrop shape, or can also be expanded in such a way that the connect to adjacent elements. In Fig. 5B an illustration is given of an element that is omitted, namely that one in the middle.

Fig. 3 illustrates an overview of the advantage of the disclosed method in view of the prior art. In the prior art one starts with a base case for which different concepts can be assigned. These concepts can be stored in a database, and for each concept, a standard design can be linked to a respective concept as being an appropriate solution. According to the innovative concept of the invention, the standard design is further optimized through the different steps of the computer-implemented method, thereby obtaining a custom design which is a better solution in view of the concept and base case.

## Claims

1. Computer-implemented method for designing a custom heat sink for exchanging heat with a component with a fluid medium, the method comprising the steps of:
- generating a mesh (201) of a patterned heat sink (100-102), said mesh comprising elements defining a discretized shape of a volume (202) enclosing the patterned heat sink, the patterned heat sink containing a set of repeating massive patterns assembled on a base plate;
- generating a heat map of the mesh by imposing a thermal load of the component thereby identifying one or more thermal spots;
- iteratively solving until reaching a convergence criterium fluid flow equations and energy equations imposed on the mesh through a topology optimization method by minimizing a global performance function through minimizing of local gradients of the elements thereby determining a local contribution per element to an overall performance of the heat sink;
- omitting one or more patterns from the patterned heat sink having a local contribution below a first predefined value thereby obtaining the custom heat sink.

2. Computer-implemented method according to claim 1, further comprising the step of, after at least one pattern is omitted through the omitting step:
- adding one or more previously omitted patterns when a respective local contribution becomes above the first predefined value after a next solving step.

3. Computer-implemented method according to any of the claims 1 to 2, wherein the volume contains the set of repeating massive patterns.

4. Computer-implemented method according to any of the claims 1 to 2, wherein the volume contains the set of repeating massive patterns and the base plate.

5. Computer-implemented method according to any of the claims 1 to 2, wherein the volume contains void regions between the massive patterns.

6. Computer-implemented method according to any of the preceding claims, further comprising iteratively performing the steps of:
- identifying one or more patterns of the set connectable to portions of respective adjacent void space having a local contribution above a second predefined value when connected;
- expanding said identified one or more patterns from the patterned heat sink with said respective portions thereby obtaining the custom heat sink.

7. Computer-implemented method according to any of the preceding claims, wherein the topology optimization method comprises one of the group of a density method, a level set method, and/or a shape optimization method.

8. Computer-implemented method according to any of the preceding claims, wherein the elements comprise one of the group of a volume element, a finite element, a boundary element, or a finite difference.

9. Computer-implemented method according to any of the preceding claims, wherein the fluid flow equations comprise a momentum equation, and/or a continuity equation, and/or a pressure equation, and/or a constitutive equation.

10. Computer-implemented method for designing a container comprising a heat sink, the container comprising means to guide a fluid medium from an inlet to an outlet of said container for exchanging heat with a component, wherein when the heatsink is designed according to one of the preceding claims, wherein the solving step further comprises minimizing or limiting a pressure drop between the inlet and the outlet to a predefined value, and wherein the identifying step for omitting patterns further comprises identifying one or more patterns of the set having a local pressure drop above a third predefined value.

11. A heat sink designed according to the method of any of the claims 1 to 10, and/or a container designed according to the method of the claim 10.

12. A data processing system comprising means for carrying out the method according to any of the claims 1 to 10.

13. A computer program product comprising instructions which, when the program is executed by a computer, cause the computer to carry out the method according to any of the claims 1 to 10.

14. A computer-readable storage medium comprising instructions which, when executed by a computer, cause the computer to carry out the steps of the method according to any of the claims 1 to 10.

15. Use of a heat sink and/or container according to claim 11 for exchanging heat with an electronic component.
